# EUROPEAN PATENT APPLICATION

(11) **EP 3 104 577 A1**
(43) Date of publication of application: **14.12.2016**
(21) Application number: 15305872.2
(22) Date of filing: 09.06.2015
(51) Int. Cl.: H04L 29/08, H04L 12/28, H04N 21/41, H04L 12/12, G06F 1/32

(54) **METHOD FOR LAUNCHING A REMOTE APPLICATION, AND CORRESPONDING COMMUNICATION DEVICE, SYSTEM, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: Jeanne, Ludovic, 35576 Cesson-Sévigné (FR); Maetz, Pascal, 35576 Cesson-Sévigné (FR); Beasse, Roland, 35576 Cesson-Sévigné (FR)
(74) Representative: Huchet, Anne

(57) **Abstract**

The disclosure relates to a method, performed on a client device of a communication network, for launching a first application of a plurality of remote applications present on a server belonging to said network, said applications being adapted to be launched remotely from said client device, said method including launching said first application. According to an embodiment, the method includes preparing said launching, said preparing including, for a second application of said applications, different from said first application, obtaining a description of said second application and searching a WoL item, in said description, to be used for awakening said server, and wakening up said server, at the time of said launching, according to said WoL item found during said searching.

## Description

### 1. Technical field

The present disclosure relates to the field of communication devices that are adapted for commanding the launching of an application to be executed on another device.

A method for launching a remote application, and corresponding communication network device, system, computer readable program product and computer readable storage medium are described.

### 2. Background art

Wireless communication end-devices, for instance smartphones, tablets, personal computers or peripherals like printers, have become widely used nowadays. They can exchange data with other wireless communication devices inside a wireless network, for instance a wireless local area network (WLAN) thanks to wireless communication interfaces, like WIFI® or Bluetooth interfaces. More and more LAN services, notably WLAN services, are deployed in a home environment. Such services often involve a client device (for instance a "second screen" device, like a tablet or a smartphone) and a device (for instance a "first screen" device like a TV display, a Blu-ray player, or a set-top box) acting as a local server for a service, or application. The client device can execute the service locally or/and can command the launching of the corresponding remote service or application on the server. In this specification, by simplification, commanding remotely (by a client device) a launching of an application on a server will be described as launching the remote application on the server.

For an easy access from a client device, a server has to be always powered-on, even if the server is used by no client device. However, this requirement is very power consuming. Thus, some mechanisms for reducing the power consumption of a powered-on device have been developed. For instance, the Wake on Local Area Network (WoL) mechanism has been proposed for waking-up a device through an IP network. According to a solution proposed by AMD (Advanced Micro Services, Inc.) or Hewlett Packard Inc., such mechanism is based on the receiving, by a network interface still awaken when other parts of a device are in a sleep mode, of a specific pattern constituting an order for waking up the device. This specific pattern usually includes the Media Access Control (MAC) address, referring to the "data link layer" (also called "level 2 layer") of the OSI (Open Systems Interconnection) model, of the recipient device.

However, this technical proposal from AMD is not a standard, and is therefore difficult to implement as a generic power management method, in a server or in a client device, because it is not possible guaranty that the device in vis-à-vis will implement the same method. Furthermore, it is necessary for using such a pattern to know the MAC address of the server to be awakened.

Nevertheless, as power saving mechanisms are becoming mandatory, some companies have already specified their specific wake-up method for devices using their services/application. However, as those mechanisms are not standardized and represent an extra work and constraint for manufacturers, they are only implemented by manufacturers when they are strongly incited to (for instance when the corresponding service is widely used).

Small companies, offering new services for instance or not being in a leadership position, cannot oblige manufacturers to implement their own solution.

This represents a strong obstacle to the deployment of their services.

So, there's a need to provide a solution that improves the user experience of a user of a wireless client device compared to prior art solutions.

### 3. Summary

The present principles enable at least one of the above disadvantages to be resolved by proposing a method, to be performed on a client device of a communication network, for launching a first application of a plurality of remote applications present on a server belonging to said network, said plurality of applications being adapted to be launched remotely from said client device, said method comprising launching said first application from said client device.

According to an embodiment of the present disclosure, the method comprises:
- preparing said launching, said preparing comprising, for at least one second application of said plurality of applications, different from said first application:
   - obtaining a description of said second application;
   - searching an item, called WoL item, in said obtained description, to be used for awakening said server.
- wakening up said server, at the time of said launching, according to at least one WoL item found during said searching.

According to an embodiment of the present disclosure, when said obtained description comprises at least one field name and one associated field content, said searching comprises:
- extracting a field content associated to a determined WoL field name from said obtained description and;
- identifying said WoL item based on said extracted field content.

According to an embodiment of the present disclosure, said second application is a determined application.

According to an embodiment of the present disclosure, said launching method comprises receiving at least one identifier of an application belonging to said plurality of applications, and notably an identifier of an application different from said first application.

According to an embodiment of the present disclosure, said launching method further comprises checking that a received identifier corresponds to a determined application and said preparing is performed according to said checking.

According to an embodiment of the present disclosure, said preparing is performed iteratively on a plurality of determined applications and/or applications identified by a received identifier.

According to an embodiment of the present disclosure, said preparing is performed iteratively on a plurality of determined applications and/or on a plurality of applications identified by a received identifier until a WoL item is found during said searching.

According to an embodiment of the present disclosure, when several WoL items are found during said searching, said waking up of said server comprises selecting one of said found WoL items.

According to an embodiment of the present disclosure, said selecting takes into account at least one selecting criteria belonging to a group comprising:
- a time of a storing of a found WoL item;
- a ranking of a found WoL item in function of a corresponding determined application;
- a preceding trying of waking up of said server thanks to a found WoL item.

According to an embodiment of the present disclosure, said method uses a standard communication protocol, like the DIAL® (or Discovery And Launch) protocol of the UPNP (Universal Plug and Play) forum.

According to an embodiment of the present disclosure, said WoL item is a MAC address.

According to an embodiment of the present disclosure, said WoL item is sent inside a frame comprising a specific pattern based on said WoL item, notably a pattern based on a repetition of said WoL item (like a packet known as "a magic packet" when said WoL item is a MAC address).

According to another aspect, the present disclosure relates to a communication device belonging to a communication network and comprising a processor configured for launching a first application of a plurality of remote applications present on a server belonging to said network, said plurality of applications being adapted to be launched remotely from said communication device,.

According to an embodiment of the present disclosure, said processor is configured for:
- preparing said launching, said preparing comprising, for at least one second application of said plurality of applications, different from said first application:
   ∘ obtaining a description of said second application;
   o searching an item, called WoL item, in said obtained description, to be used for awakening said server.
- wakening up said server, at the time of said launching, according to at least one WoL item found during said searching.

While not explicitly described, the communication device of the present disclosure can be adapted to perform the method of the present disclosure in any of its embodiments.

According to another aspect, the present disclosure relates to a system, comprising a least one client device and at least one server belonging to a communication network, said client device comprising a processor configured for launching a first application of a plurality of remote applications present on said server and adapted to be launched remotely from said client device.

According to an embodiment of the present disclosure, said processor of said client device is configured for:
- preparing said launching, said preparing comprising, for at least one second application of said plurality of applications, different from said first application:
   ∘ obtaining a description of said second application;
   o searching an item, called WoL item, in said obtained description, to be used for awakening said server.
- wakening up said server, at the time of said launching, according to at least one WoL item found during said searching.

While not explicitly described, the present embodiments related to a launching method or to the corresponding communication device or system can be employed in any combination or sub-combination. For example, some embodiments of the launching method can involve a preparing performed iteratively on a plurality of determined applications and/or applications identified each by a received identifier, a waking up of said server comprising a selecting one of said found WoL items (for instance a WoL item that has already been successfully used to awake said server) and the client and server devices can exchange messages based on a standard communication protocol, like the DIAL/ UPnP (for Universal Plug and Play) protocol.

According to another aspect, the present disclosure relates to a non-transitory program storage device, readable by a computer.

According to an embodiment of the present disclosure, said non-transitory computer readable program product tangibly embodies a program of instructions executable by a computer to perform the launching method of the present disclosure in any of its embodiments.

According to another aspect, the present disclosure relates to a computer readable storage medium carrying a software program comprising program code instructions for performing the method of the present disclosure, in any of its embodiments, when said non transitory software program is executed by a computer.

### 4. List of drawings.

The present disclosure will be better understood, and other specific features and advantages will emerge upon reading the following description, the description making reference to the annexed drawings wherein:
- Figure 1 shows an example of a communication system according to a particular embodiment;
- Figure 2 is a functional diagram that illustrates a particular embodiment of the launching method of the present disclosure, compatible with the embodiment illustrated by figure 1; and
- Figure 3 illustrates a communication device adapted to at least one particular embodiment.

It is to be noted that the drawings have only an illustration purpose and that the embodiments of the present disclosure are not limited to the illustrated embodiments.

### 5. Detailed description of the embodiments.

At least one embodiment of the present disclosure offers a new way of waking up a first communication device, from a second communication device belonging to the same communication network, in order to launch and/or run an application on that first device. The second device can notably be a tablet, a smart phone, a connected watch, and the like.

More precisely, the disclosure implements a network wake-up solution, that enables the launching of an application of a communication device, acting as a server and being in a sleeping state, by using a capability of waking-up the server, tailored for another application being also launchable on the server.

In fact, WoL features are often not taken into account by standard protocols. As a consequence, some application providers have found solutions for providing their own network wake-up features for environment using such a standard protocol. Those features are used in order to wake up a distant device when launching their own application. As those features imply communication between devices, and notably low level communication, they need to be implemented at the system level on the server side.

Thus, such solutions imply a cooperation of the server provider and so are only adapted to application providers being in a big strength market position, or providing a very specific application, tailored to some specific server for instance.

The general principles of the disclosure are to use a WoL feature, implemented at the server side for a first application (for instance a largely used application), for the launching of a second application, for which no specific WoL feature is implemented on the server side (or for which no specific WoL feature is known by the client device as being implemented on the server side).

This implies, at the client side, becoming aware of the WoL feature to be used to awake the server. Indeed, if a server device implements a WoL feature for a specific client application, and is discoverable by a protocol (like DIAL/UPnP for instance), another client application that integrates the same discovery protocol and has knowledge of the WoL feature implemented by the server, is capable of detecting and awakening the server device.

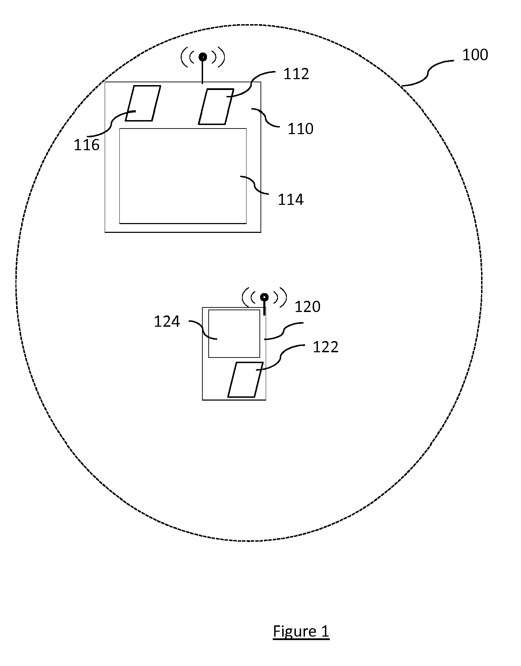

In the detailed embodiment illustrated in **figure 1****,** a wireless local area network (WLAN) 100 is described.

The WLAN, for instance a Wi-Fi based network, notably includes a "first screen" device 110, equipped with a display 114, acting as a local server (for instance a TV display, a Blu-ray player, or set-top box) and a client device 120 (acting as a "second screen device", like a tablet or a smartphone) equipped with a display 124.

A plurality of applications 112, 116 may be launched and/or run on the server 110.

A user of the client device 120 may choose to launch an application 122 (also called "second screen application") on its device and then ask for the execution of the corresponding application 112 (also called "first screen application") of the server 110. For instance, the application 112 can be rendered on a larger display 114 of the server 110.

In this illustrated embodiment, the protocol to be used to exchange data between the client device 120 and the server device 110 is a standard protocol. For instance, it can be a standard protocol enabling the client device (and its second screen applications) to communicate with a server device (and its first screen applications) without requiring a pairing between devices, like the DIAL® (Discovery And Launch) protocol proposed by the firm Netflix™. In the particular embodiment described, both client 120 and server 110 notably support the version 1.1 of the HTTP standard.

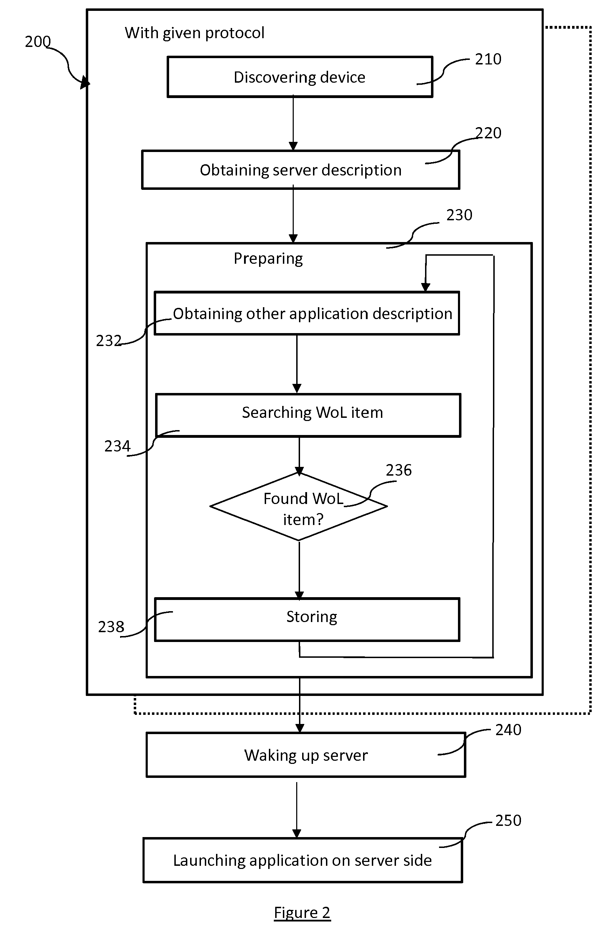

**Figure 2** shows the launching method 200 of the present disclosure, in a particular embodiment, implemented in the WIFI client device 120.

According to the detailed embodiment illustrated by figures 1 and 2, the launching method 200 of the present disclosure includes a preliminary discovering 210, by the client device 120, of devices present on the LAN, and notably the specific server 110 on which the "first screen application" is to be launched.

Depending upon embodiments, this discovering 210 can be performed for instance during a boot and/or an initialization of the client device 120, or periodically (for instance on a daily manner), or each time the first screen application 112 is to be launched (from second screen application 122 for instance).

According to the illustrated embodiment, where the protocol used is the DIAL® protocol, this discovering 210 can for instance include a sending over the WLAN of a search request within the SDDP protocol (Simple Device Discovery Protocol) defined by UPnP and at least one receiving from a device belonging to the WLAN 100 of a search response. Notably the client device 120 can receive a search response from the server 110.

According to the illustrated embodiment, where the protocol used is the DIAL® protocol, the "Search" exchange between the client and the server can take the form, for instance, of a sending of a message of type "M-SEARCH request" followed by the receiving of a "M-SEARCH response", as defined by the DIAL® protocol, like the following messages (if the IPv4 address of the server 110 is 192.168.1.1):
Sent message:
   MSEARCH * HTTP/1.1
   HOST: 239.255.255.250:1900
   MAN: "ssdp:discover"
   MX: seconds to delay response
   ST: urn:dialmultiscreenorg:service:dial:1
   USERAGENT: OS/version product/version
Received message:
   M-SEARCH response
   HTTP/1.1 200 OK
   LOCATION: http://192.168.1.1:52235/dd.xml
   CACHECONTROL: max age=1800
   EXT: BOOTID.UPNP.ORG: 1
   SERVER: OS/version UPnP/1.1 product/version

This response notably includes an address of the server in the network, like an absolute HTTP URL of the server.

According to the illustrated embodiment, once the server has been discovered by the client device, the method includes acquiring 220 a description of the server 110. This acquiring 220 can, for instance, include sending over the WLAN a device description request to the server 110 and receiving from the server a device description response.

According to the illustrated embodiment, where the protocol used is the DIAL protocol, the "device description" exchange between the client and the server can take the form of a sending of a message of type "device description request" followed by the receiving of a "device description response".

For instance, the device description request can be an HTTP request (like the HTTP GET request : dd.xml HTTP/1.1), including the HTTP URL already received from the server and the device description response can be a response "HTTP/1.1 200 OK", comprising notably an absolute URI of the root directory of the DIAL Rest service (for instance "http://192.1.1:12345/apps"), that permits to access to applications available on the server.

According to the embodiments of figures 1 and 2, the method 200 also includes a preparing 230, by the client device, of a launching of the first remote application 112 on the server 110.

This preparing 230 notably includes an obtaining 232 of a description of a second application 116 present on the server.

In some embodiment, this second application can be a determined application, known from the client. It can for instance correspond to an application identified by an identifier belonging to a list of identifiers of determined applications stored on the client device. Notably, such a determined application can be an application frequently implemented on a server or commonly used on a communication device (like a largely used web browser) and for which a WoL feature is often defined at a server side. In other embodiments, the preparing can include a receiving (not illustrated), performed before the obtaining 232, of at least one application identifier present on the server. Depending upon embodiments, this application identifier can be sent from a server or from a third device.

In the particular embodiment illustrated, where the protocol used is the DIAL protocol, the obtaining 232 can include requesting information about the second application 116 (or a DIAL service in the illustrated embodiment) available on the server, for instance by an HTTP GET request against the URL of the second application (for instance "http://192.1.1:12345/apps:secondApplicationName").

In such an embodiment, the client device can then receive an application information response from the server. This response notably includes a description of the second application and its implementation on the server side.

For instance, according to the DIAL protocol, the client device can receive the following application information response, from the server:
<?xml version="1.0" encoding="UTF8"?>
<service xmlns="urn:dialmultiscreenorg:schemas:dial">
<name> secondApplicationName</name>
<options allowStop="true" wol_mac_address="11:22:33:44:55:66"/>
<state>running</state>
<link rel= "run" href=http://192.168.1.1:12345/apps/secondApplicationName/run/>
</service>

According to the illustrated embodiment, the obtained description contains several fields (or descriptors), composed for instance of at least a field name and a field content. In some other embodiment, the field name can be omitted and implicitly represented by the position of the field inside the description.

The description can notably include standardized fields of the application, like the field "state" indicating a current state of the second application. In can also include at least one not standard field defined at the application level. Notably, according to DIAL protocol, an application description response can include optional fields - including for instance optional field name and related value - introduced by the tag "option". Indeed, with the DIAL protocol, it is possible to specify additional options related to an application. The inventors have empirically found that, for some particular applications, some optional fields can notably include WoL fields, in order for the application in object, at the client side, to wake up the server in order to launch the corresponding application on the server side.

However, even if the WoL capability of the server is described in a description of a specific application (like the second application 116 of Figure 1), a WoL feature is often a feature related to a network interface and so can be used for the launching of another application (like the first application 112 here). The field name can notably be known from the client, for instance when the second application 116 is a determined application.

In the embodiment illustrated by figure 2, the preparing 230 also includes a searching 234 of a WoL item in the obtained description.

According to the detailed embodiment, based on DIAL protocol, the searching 234 includes an extraction of a content associated to the tag "option".

For instance, the content introduced by the tag "option" can notably include a field name (for instance "WoL item to be used") followed by a field value being a WoL item to be used for waking up the server before launching this particular application. A MAC address to be used in a frame comprising a specific pattern (like a WoL magic frame) can be this kind of WoL item.

For instance, in the illustrated embodiment, the HTML tag "option" of the application information response can be the following:
<options allowStop="true" wol_mac_address="11:22:33:44:55:66"/>

In the example above, the field name "wol_mac_address" is assigned a MAC address value to be used by a client for awakening the server device with a frame built with a specific pattern (like a frame known by the one skilled in the art as a WoL "Magic" frame or packet").

In the described embodiment, the method of the present disclosure also includes analyzing the extracted content relating to the "option" tag in order to identify an optional field (like "wol_mac_address" in the example given) relating to a WOL feature and the associated WOL item (like "11:22:33:44:55:66" in the example given). When a WoL item is found 236, the method includes storing 238 this WoL item. In some embodiment, the preparing 230 can be performed once, by requesting a description of a unique determined application or of a unique application identified thanks to the server description.

In some others embodiments, it can be performed several times, by requesting a description of several determined applications, or a description of several applications identified thanks to the server, or a description of at least one determined applications and a description of at least one applications identified thanks to the server.

Notably, when no WoL item is found in an obtained description, the preparing can be performed by requesting and/or analyzing a description of another application, different to the application about which a description has already been obtained. In some embodiments, when no WoL item has been found during all the performed preparing, the method can include periodic trying of launching the first application until a successful launching is performed. This can be the case for instance because the server has been awakened by a second application, launched independently on the server, either locally or from the client device or another device.

In some embodiments, where the method includes receiving identifiers of applications present on the server, the method can include, before the preparing, checking of whether a received identifier corresponds to a determined application. Notably, the preparing can be only performed on determined applications for which an identifier has been received.

Depending upon embodiments, the preparing 230 can be achieved when a WoL item is found or can be performed iteratively on all the determined and/or identified applications.

According to the described embodiment, the method also includes trying to wake up 240 the server 110 by using a stored WoL item.

For instance, waking up the server can include sending to the server a specific frame based on a found WoL item (like a frame known as "magic packet").

Depending upon embodiments, the way of constructing a WoL frame for waking up the server from a found WoL item may be known from the client in association with a determined application. When the application is not a determined application, several WoL frames may be tested before successfully waking up the server.

An embodiment where several WoL items are stored can permit to "try" different WoL items until the server has been successfully awaken. Such an embodiment can include a selecting of one of the found WoL items according to at least one criteria. For instance, the selecting can take into account the time of storing of the found WoL items (in order to select the most recently stored for instance). The selecting can also take into account a determined ranking of determined applications linked to found WoL items. For instance th selecting can be performed according to a popularity ranking in order to select a found WOL item obtained from a description of a very popular determined application, for which specific WOL item will be more likely defined on the server side. In some embodiments, the selected WoL item can be a found WoL item that has the most recently been used by the client device for a successful waking up of the server.

In other embodiments, different patterns can be constructed based on a given WoL item and tried for waking up the server 110. In such embodiments, the method can include storage of at least one successful pattern and/or selecting of at least one stored successful pattern (like the most recently successfully used).

Once the server has been awakened, the method also includes launching 250 the first application 112 on the server side.

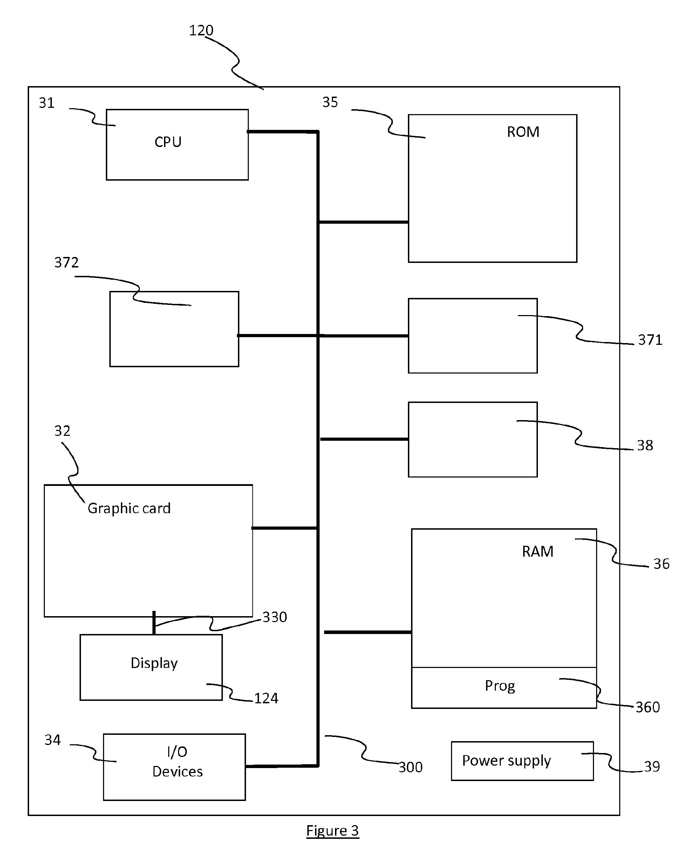

Figure 3 describes the structure of a communication device 120.

In the particular embodiment of figure 3, the communication device 120 can include different devices, linked together via a data and address bus 300, which can also carry a timer signal. For instance, it can includea micro-processor 31 (or CPU), a graphics card 32 (depending on embodiments, such a card may be optional), at least one Input/ Output module 34, (like a keyboard, a mouse, a led, and so on), a ROM (or « Read Only Memory ») 35, a RAM (or « Random Access Memory ») 36, communication interfaces 371, 372 configured for the reception and/or transmission of data, via a wireless connection (notably of type WIFI® or Bluetooth), wired communication interfaces 38 (optional), a power supply 39.

In some embodiments, the communication device 120 can also include, or be connected to, a display module 124, for instance a screen, directly connected to the graphics card 32 by a dedicated bus 330.

In the illustrated embodiment, the communication device 120 can communicate with the server 110 (comprising a display 114 as illustrated by figure 1) thanks to a wireless interface.

Each of the mentioned memories can include at least one register, that is to say a memory zone of low capacity (a few binary data) or high capacity (with a capability of storage of a whole program or of all or part of data representative of data to be calculated or displayed).

When the communication device 120 is powered on, the microprocessor 31 loads the program instructions 360 in a register of the RAM 36, notably the processes needed for performing at least one embodiment of the launching method described herein, and executes the program instructions.

According to a variant, the communication device 120 includes several microprocessors. According to another variant, the power supply 39 is external to the communication device 30.

In the particular embodiment illustrated in figure 3, the microprocessor 31 can be configured for launching a first application of a plurality of remote applications present on a server belonging to said network, said plurality of applications being adapted to be launched remotely from said communication device.

In the particular embodiment described, the processor is configured for:
- preparing said launching, said preparing comprising, for at least one second application of said plurality of applications, different from said first application:
   ∘ obtaining a description of said second application;
   o searching an item, called WoL item, in said obtained description, to be used for awakening said server.
- wakening up said server, at the time of said launching, according to at least one WoL item found during said searching.

The communication device 120 can notably belong to a communication system further comprising the server.

The present disclosure has been described in relation with a DIAL protocol.

Of course, as it will be understandable for a person skilled in the art, the present disclosure may also been applied in a communication system using other network protocols, notably network protocols requiring or not requiring a pairing between of the communication client and a "server" device.

In some embodiments where several network protocols can be used in order to reach a server, some parts of the method (like the discovering 210, the obtaining 220 of a server description and the preparing 230 as illustrated by figure 2) can be performed iteratively with each of the network protocols, in order to found more WoL items to be used to wake up the server.

As will be appreciated by one skilled in the art, aspects of the present principles can be embodied as a system, method, or computer readable medium. Accordingly, aspects of the present disclosure can take the form of an hardware embodiment, a software embodiment (including firmware, resident software, micro-code, and so forth), or an embodiment combining software and hardware aspects that can all generally be referred to herein as a "circuit", module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. A method, to be performed on a client device of a communication network, for launching a first application of a plurality of remote applications present on a server belonging to said network, said plurality of applications being adapted to be launched remotely from said client device, said method comprising launching said first application from said client device and being **characterized in that** it comprises:
- preparing said launching, said preparing comprising, for at least one second application of said plurality of applications, different from said first application:
∘ obtaining a description of said second application;
∘ searching an item, called WoL item, in said obtained description, to be used for awakening said server.
- wakening up said server, at the time of said launching, according to at least one WoL item found during said searching.

2. The launching method according to claim 1 **characterized in that** said searching comprises :
- extracting a field content associated to a determined WoL field name from said obtained description and;
- identifying said WoL item based on said extracted field content.

3. A launching method according to claim 1 or 2 **characterized in that** said second application is a determined application.

4. A launching method according to at least one of claims 1 to 3 **characterized in that** it comprises receiving at least one identifier of an application belonging to said plurality of applications.

5. A launching method according to claim 4 **characterized in that** said method further comprises checking that a received identifier corresponds to a determined application and said preparing is performed according to said checking.

6. A launching method according to at least one of claims 1 to 5 **characterized in that** said preparing is performed iteratively on a plurality of determined applications and/or applications identified by a received identifier.

7. A launching method according to at least one of claims 1 to 6 **characterized in that** said preparing is performed iteratively on a plurality of determined applications and/or on a plurality of applications identified by a received identifier until a WoL item is found during said searching.

8. A launching method according to at least one of claims 1 to 7 **characterized in that** when several WoL items are found during said searching, said waking up of said server comprises selecting one of said found WoL items.

9. A launching method according to at least one of claims 1 to 8 **characterized in that** said selecting takes into account at least one selecting criteria belonging to a group comprising:
- a time of a storing of a found WoL item;
- a ranking of a found WoL item in function of a corresponding determined application;
- a preceding trying of waking up of said server thanks to a found WoL item.

10. A launching method according to at least one of claims 1 to 10 **characterized in that** said WoL item is a MAC address.

11. A launching method according to at least one of claims 1 to 11 **characterized in that** said WoL item is sent inside a frame comprising a specific pattern based on said WoL item.

12. A communication device, belonging to a communication network and comprising a processor configured for launching a first application of a plurality of remote applications present on a server belonging to said network, said plurality of applications being adapted to be launched remotely from said communication device, said communication device being **characterized in that** said processor is configured for:
- preparing said launching, said preparing comprising, for at least one second application of said plurality of applications, different from said first application:
∘ obtaining a description of said second application;
o searching an item, called WoL item, in said obtained description, to be used for awakening said server.
- wakening up said server, at the time of said launching, according to at least one WoL item found during said searching.

13. A system, comprising a least one client device and at least one server belonging to a communication network, said client device comprising a processor configured for launching a first application of a plurality of remote applications present on said server and adapted to be launched remotely from said client device, said system being being **characterized in that** said processor of said client device is configured for:
- preparing said launching, said preparing comprising, for at least one second application of said plurality of applications, different from said first application:
∘ obtaining a description of said second application;
o searching an item, called WoL item, in said obtained description, to be used for awakening said server.
- wakening up said server, at the time of said launching, according to at least one WoL item found during said searching.

14. A non-transitory computer readable program product, **characterized in that** it comprises program code instructions for performing the launching method according to at least one of claims 1 to 11, when said non-transitory software program is executed by a computer.

15. Computer readable storage medium carrying a software program **characterized in that** it comprises program code instructions for performing the launching method according to at least one of claims 1 to 11, when said non-transitory software program is executed by a computer.
